Europäisches Patentamt

European Patent Office

Office européen des brevets

(19)

(11) Numéro de publication : **0 167 428**
**B1**

(12) **FASCICULE DE BREVET EUROPÉEN**

(45) Date de publication du fascicule du brevet :
02.11.89

(51) Int. Cl.⁴ : $G\ 21\ C\ \ 7/26$

(21) Numéro de dépôt : 85401069.1

(22) Date de dépôt : 30.05.85

(54) **Procédé de mise en oeuvre d'un réacteur nucléaire et réacteur nucléaire à eau légère et à variation de spectre en comportant application.**

(30) Priorité : 30.05.84 FR 8408548

(43) Date de publication de la demande :
08.01.86 Bulletin 86/02

(45) Mention de la délivrance du brevet :
02.11.89 Bulletin 89/44

(84) Etats contractants désignés :
AT BE CH DE GB IT LI SE

(56) Documents cités :
EP--A-- 0 054 238
EP--A-- 0 108 019
FR--A-- 2 130 225
US--A-- 3 957 575

(73) Titulaire : FRAMATOME
Tour Fiat 1, Place de la Coupole
F-92400 Courbevoie (FR)

(72) Inventeur : Leroy, Claude
51 bis Grande Rue
F-91190 Lardy (FR)
Inventeur : Millot Jean-Paul
1, Allée des Roitelets
F-78340 Elancourt (FR)
Inventeur : Gonse, Eric
11, rue des Fontenais
F-92330 Sceaux (FR)

(74) Mandataire : Fort, Jacques et al
CABINET PLASSERAUD 84, rue d'Amsterdam
F-75009 Paris (FR)

EP 0 167 428 B1

Jouve, 18, rue St-Denis, 75001 Paris, France

## Description

La présente invention concerne les réacteurs nucléaires à eau légère et, notamment, un procédé de mise en œuvre d'un tel réacteur permettant de le faire fonctionner avec des neutrons dont le spectre d'énergie est modifiable à volonté.

Les réacteurs nucléaires à eau légère comprennent généralement une cuve de résistance à la pression contenant un cœur constitué d'assemblages combustibles verticaux juxtaposés, constitués chacun d'éléments ou « crayons » combustibles disposés aux nœuds d'un réseau régulier, contenant de la matière fissile et éventuellement de la matière fertile. A certains nœuds du réseau les crayons de combustible sont remplacés par des tubes-guides dans lesquels peuvent coulisser des crayons mobiles appartenant à des grappes de commande. Ces assemblages combustibles sont remplacés, au moins partiellement, à l'issue de chaque cycle du fonctionnement du réacteur, ce qui implique d'ouvrir la cuve.

Dans chaque assemblage combustible, les crayons sont séparés par un intervalle de passage de l'eau de refroidissement et de modération. On définit le rapport de modération VM/VU comme le rapport du volume de modérateur VM sur le volume de matériau fissile VU dans le cœur.

Les réacteurs à eau légère actuellement en service fonctionnent avec un rapport de modération tel que le spectre d'énergie des neutrons soit thermique. On a ultérieurement exploré deux voies pour améliorer les performances des réacteurs à eau légère et surtout pour mieux utiliser le matériau combustible. Ces deux voies impliquent l'une et l'autre une diminution, au moins temporaire, du rapport de modération.

Une première voie consiste à faire varier le spectre d'énergie des neutrons au fur et à mesure de l'épuisement du combustible au cours d'un cycle. Elle permet de réduire, à taux de combustion donné, la consommation d'uranium naturel et l'enrichissement initial requis. Une solution particulièrement avantageuse de ce type est décrite dans le document EP-A-0 108 019 ou FR-A-2 535 509. Ce document divulgue un procédé tel que défini dans le préambule de la revendication 1. Le réacteur décrit dans ce document a une structure comparable à celle des réacteurs à eau sous pression de type classique mais il comporte un dispositif mécanique de variation de spectre des neutrons, comprenant des grappes de crayons contenant un matériau fertile, tel que l'uranium naturel ou appauvri, qui peuvent être déplacées de façon à être introduites dans le cœur ou au contraire extraites du cœur au cours du fonctionnement du réacteur. Les crayons fertiles introduits dans certains tubes-guides des assemblages du cœur empêchent le modérateur de pénétrer dans ces tubes-guides et diminuent le volume VM de modérateur dans le cœur.

On peut ainsi, au cours d'un même cycle de combustion du cœur, modifier le spectre d'énergie des neutrons. Au cours d'une première partie du cycle, les grappes de crayons fertiles sont maintenues dans le cœur. Elles décalent le spectre d'énergie des neutrons vers les hautes énergies et augmentent le taux de conversion de la matière fertile (uranium 238) en matière fissile (plutonium). Au cours d'une seconde partie du cycle de combustion du cœur, on extrait progressivement les grappes de crayons destinées à effectuer la variation de spectre. La matière fissile formée pendant la première partie du cycle est alors partiellement consommée. On réalise une économie de combustible du fait que le taux de conversion est augmenté d'environ 10 % par rapport à un réacteur à eau sous pression à neutrons thermiques de type classique.

L'autre voie consiste à faire fonctionner le réacteur en régime systématiquement sous-modéré, ce qui autorise l'emploi de combustible mixte uranium naturel-plutonium avec un taux de régénération du plutonium par conversion de l'ordre de 1. Mais la diminution requise du taux de modération VM/VU impose alors pratiquement de disposer les crayons dans les assemblages suivant un pas triangulaire et non plus carré.

Les réacteurs sous-modérés comportent généralement deux types d'assemblages combustibles. Les uns appelés assemblages fissiles, contiennent surtout du matériau fissile. Les autres, appelés assemblages fertiles, contiennent un matériau susceptible de se transformer en matériau fissile sous l'effet des neutrons. Les assemblages fertiles sont généralement disposés à la périphérie du cœur et recueillent les neutrons produits par les assemblages fissiles.

On a enfin proposé des solutions visant à combiner les avantages de la variation de spectre (notamment le gain sur la consommation d'uranium) et de la sous-modération (taux de régénération de plutonium pouvant dépasser 1, possibilité d'utilisation d'uranium appauvri, durée de cycle accrue) en y associant des moyens permettant d'arriver à la sous-modération. Une solution particulièrement intéressante est décrite dans la demande de brevet français FR-A-2 552 920. Elle consiste à utiliser un cœur hétérogène dans lequel des assemblages combustibles de réacteur sous-modéré et des assemblages de réacteur à variation de spectre sont juxtaposés pour permettre une utilisation rationnelle du plutonium antérieurement produit dans des assemblages combustibles de réacteurs nucléaires classiques (à neutrons thermiques) à eau sous pression, plutonium récupéré lors du traitement en usine d'assemblages combustibles après irradiation.

Cette dernière sujétion est toutefois un inconvénient. L'exploitant qui possède plusieurs centrales nucléaires doit consacrer au moins une centrale à l'utilisation du plutonium recyclé.

Il semble à première vue que cette difficulté ne peut être surmontée. En effet, le type d'assemblage qu'exige ce fonctionnement ne s'adapte apparemment pas aux équipements internes et de commande d'un réacteur destiné à recevoir des assemblages prévus pour un spectre de neutrons thermiques, et inversement.

L'invention vise à écarter l'inconvénient que représente la nécessité de disposer de plusieurs types de réacteurs ayant chacun un régime particulier et une conception particulière et à fournir un procédé d'exploitation souple d'un réacteur à eau sous-pression dont le cœur est constitué d'assemblages combustibles ayant tous la même géométrie imposée.

Dans ce but, l'invention a trait à un procédé d'exploitation de réacteur nucléaire à eau légère conforme à la revendication 1 et à un réacteur nucléaire à eau légère mettant en application ce procédé et conforme à la revendication 7.

En dessinant les assemblages destinés à un fonctionnement sous-modéré de façon qu'eux aussi autorisent une variation de spectre et en prévoyant aux mêmes emplacements les tubes-guides destinés à recevoir les grappes de crayons fertiles, il est possible, sans aucune modification des équipements internes supérieurs du réacteur et des mécanismes de commande, de faire fonctionner le réacteur dans une très large plage de modération, depuis le domaine des neutrons thermiques jusqu'à celui des réacteurs sous-modérés très plutonigènes, au cours de deux cycles de fonctionnement successifs.

Pour permettre la compatibilité requise des différents assemblages, tous les assemblages comporteront des crayons de combustible disposés suivant le même réseau, typiquement triangulaire. Généralement on sera amené à faire fonctionner le réacteur au cours de son premier cycle avec variation de spectre simple, en utilisant comme matériau fissile de l'uranium enrichi en U 235, et au cours du second cycle, en sous-modéré, en utilisant comme matériau fissile de l'uranium naturel ou appauvri avec du plutonium sous forme d'oxydes $UO_2$-$PuO_2$.

A titre de simple exemple, on peut envisager les plages de taux de modération suivantes :

|  | | VS | SM |
|---|---|---|---|
| | Grappes fertiles extraites | 2 | 1,4 |
| VM/VU | | | |
| | Grappes fertiles insérées | 1,5 | 1,1 |

Les abréviations VS et SM correspondent respectivement aux fonctionnements à variation de spectre et sous-modéré. On peut rappeler que les réacteurs actuels à eau légère sous pression fonctionnent généralement avec un taux de modération d'environ 1,9.

La mise en œuvre de l'invention imposera en général de munir la cuve de moyens de manœuvre d'une grappe de commande pour chaque assemblage, parmi lesquelles les deux tiers seront utilisés pour la variation de spectre (grappes fertiles) et un tiers pour les fonctions habituelles de réglage et de compensation (grappes absorbantes). Les moyens de manœuvre des grappes peuvent être de type classique, et par exemple être du type électromécanique à cliquets pour les grappes absorbantes, du type hydraulique pour les grappes fertiles.

L'invention provoque également un réacteur permettant de mettre en œuvre le procédé ci-dessus défini, comprenant, dans une cuve de résistance à la pression, un cœur constitué par juxtaposition d'assemblages combustibles verticaux contenant des crayons de combustible et des tubes-guides répartis aux nœuds d'un réseau triangulaire et comprenant des mécanismes de déplacement vertical et des équipements internes supérieurs de guidage de grappes de commande constituées les unes de crayons fertiles permettant de modifier le spectre neutronique au cours d'un cycle et les autres de crayons de matériau absorbant, caractérisé en ce que le réacteur comporte un mécanisme de déplacement au droit de chaque emplacement d'assemblage et en ce que le réseau des crayons dans chaque assemblage est tel que le cœur soit sous-modéré lorsque tous les nœuds sont occupés, certains au moins des assemblages comprenant en certains nœuds du réseau, des tubes occupés par l'eau, dont le nombre et la répartition sont tels qu'ils permettent un fonctionnement du réacteur en modération thermique.

L'invention sera mieux comprise à la lecture de la description qui suit d'un mode particulier d'exécution, donné à titre d'exemple non limitatif. La description se réfère aux dessins qui l'accompagnent, dans lesquels :

— la figure 1a est une vue en coupe schématique, par un plan transversal, d'une fraction du cœur d'un réacteur nucléaire, constitué de façon à être sous-modéré, à variation de spectre et à taux de conversion (taux de régénération de plutonium) élevé ;

— la figure 1b est une vue en coupe par un plan transversal d'un assemblage combustible du cœur représenté sur la Figure 1a ;

— la figure 2a est une vue en coupe par un plan transversal d'une fraction du cœur du même réacteur nucléaire, constitué de façon à fonctionner à variation de spectre jusqu'au domaine thermique ;

— la figure 2b est une vue en coupe par un plan transversal d'un assemblage combustible du cœur représenté sur la Figure 2a ;

— la figure 3 est une coupe schématique, suivant un plan vertical, d'une fraction d'un réacteur pouvant recevoir un cœur suivant la Figure 1a ou la Figure 2a ;

— la figure 4 est une vue horizontale schématique montrant une répartition possible des grappes.

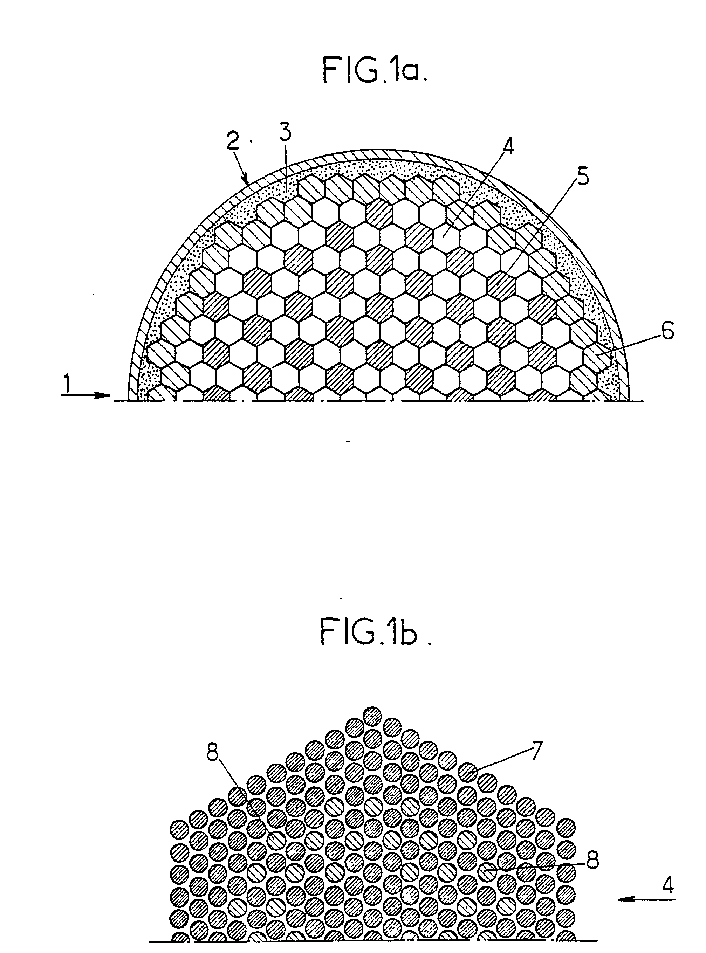

Le cœur 1 montré en figures 1a et 1b est constitué d'assemblages combustibles placés à l'intérieur

3

d'une enveloppe 2 contenue dans la cuve de résistance à la pression (non représentée). Les assemblages ont une forme prismatique à section hexagonale et sont disposés côte à côte et verticalement. Entre les assemblages et l'enveloppe de cœur 2 est disposé un réflecteur lourd de neutrons 3 constitué par exemple de blocs d'acier inoxydable permettant la transition entre la forme hexagonale générale du cœur et la forme circulaire de l'enveloppe 2. Ce réflecteur constitue un cloisonnement autour des assemblages et peut être fixé à l'enveloppe de cœur 2.

Fonctionnement sous-modéré.

Le cœur destiné à fonctionner avec sous-modération comprend des assemblages de trois types différents, soit par leur structure propre, soir par celle des grappes avec lesquelles ils coopèrent.

Les assemblages 4 sont des assemblages fissiles dont les crayons contiennent de l'uranium enrichi en U 235 ou Pu. Ils sont placés de façon que leurs tubes-guides reçoivent les grappes de crayons d'oxydes d'uranium appauvri. Lorsque ces crayons sont dans le cœur, ils réduisent le volume de modérateur et provoquent le fonctionnement du réacteur de la façon décrite dans la demande de brevet EP-A-0 153 240.

Les assemblages 5 sont eux aussi des assemblages fissiles. Mais leurs tubes-guides sont placés pour recevoir des grappes de crayons contenant un matériau absorbant les neutrons sans fission. De manière conventionnelle, ils assurent le réglage de la puissance du réacteur.

Les assemblages 6 sont des assemblages fertiles constitués par des crayons renfermant de l'uranium naturel ou appauvri et permettant la production de matière fissile (plutonium).

Un assemblage fissile (Figure 1b) comporte un ensemble de crayons fissiles 7 renfermant chacun une colonne de pastilles constituées par un mélange d'oxyde d'uranium et d'oxyde de plutonium ; leur matière fissile est constituée par de l'uranium 235 et du plutonium 239. Les crayons fissiles 7 sont disposés suivant un réseau régulier à maille triangulaire.

Chacun des assemblages 4 à section hexagonale est juxtaposé, dans la partie centrale du cœur, à six autres assemblages fissiles 4 ou 5. A la périphérie du cœur, les assemblages fissiles sont juxtaposés à trois assemblages fissiles 4 ou 5 et à trois assemblages fertiles 6. L'ensemble des crayons de tous les assemblages constitue un réseau régulier à mailles triangulaires dans les sections transversales de cœur. Chaque crayon 1 comporte à chacune de ses extrémités une colonne de pastilles d'uranium naturel constituant une couverture axiale qui, de la même manière que le réflecteur lourd 3, limite la fuite des neutrons vers les équipements du réacteur.

Dans le réseau des crayons combustibles 7 constituant l'assemblage 4, quarante emplacements de la maille sont occupés par des tubes-guides 8 de même diamètre que les crayons combustibles 7.

Comme décrit dans la demande de brevet EP-A-0 153 240 la présence des tubes-guides 8 augmente l'espacement entre les crayons 7 et de ce fait accroît le rapport de modération lorsque ces tubes sont remplis d'eau. Leur présence assure la compatibilité avec les contraintes de tenue mécanique de l'assemblage combustible et de comportement thermohydraulique.

Pour combattre l'augmentation du rapport de modération et permettre le fonctionnement sous-modéré, les tubes-guides 8 sont prévus pour recevoir les grappes de crayons fertiles qui lors de leur insertion diminuent le volume de modérateur dans le cœur ainsi équipé autorisant de la sorte un taux de conversion élevé de l'uranium 238 contenu dans les grappes fertiles et dans les crayons fissiles en plutonium 239.

Les tubes-guides 8 des assemblages combustibles 5 sont destinés à recevoir les grappes de crayons permettant le pilotage du réacteur nucléaire.

Fonctionnement en variation de spectre.

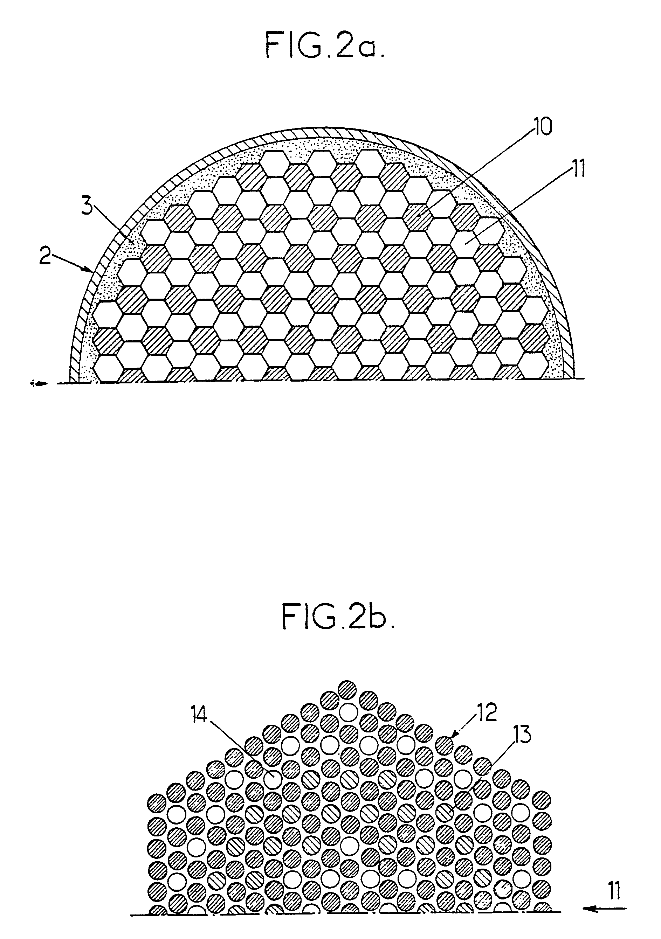

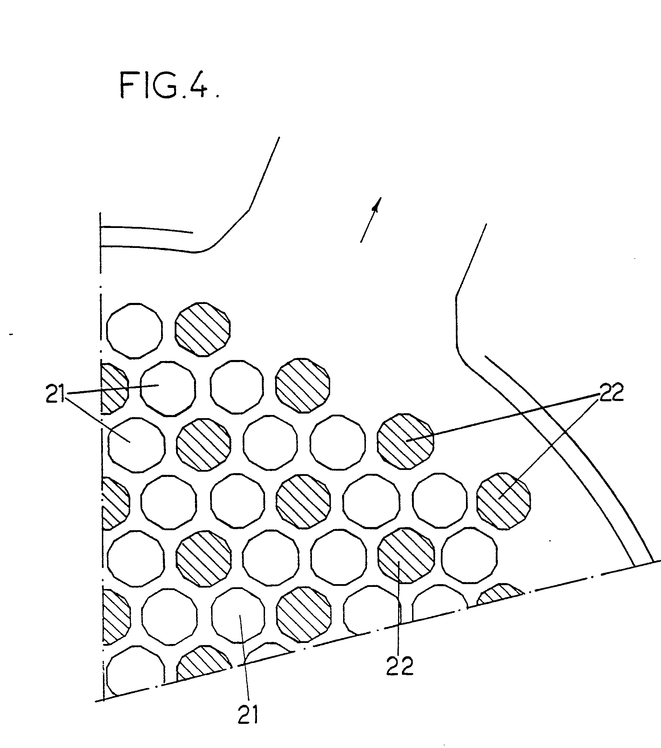

La figure 2a montre un cœur constitué d'assemblages combustibles qui, selon la présente invention, se placent de la même manière que les assemblages 4, 5, et 6 du cœur précédemment décrit dans le réflecteur lourd 3 fixé à l'enveloppe de cœur 2. Mais seuls deux types d'assemblages ayant la même forme prismatique à section hexagonale que les assemblages 4, 5 et 6, sont disposés à l'intérieur du cloisonnement.

Chacun des assemblages 10 et 11 (Fig. 2a), est équipé de tubes-guides 13 destinés à recevoir soit des grappes de crayons fertiles pour les assemblages 11, soit des grappes de crayons absorbants pour les assemblages 10, situés aux mêmes emplacements que les tubes-guides 8 dans le réseau des crayons 12 identiques aux crayons 7.

L'introduction des grappes fertiles dans les tubes-guides 13 des assemblages 11 diminue le volume du modérateur dans le cœur et permet ainsi un fonctionnement du réacteur comme dans le cas décrit dans la demande de brevet EP-A-108 019, avec « durcissement » local du spectre des neutrons.

La figure 2b montre que ce durcissement local est rendu nécessaire du fait que les crayons des assemblages 11 sont disposés de façon à être utilisés dans un spectre qui va jusqu'aux neutrons thermiques lorsque les grappes fertiles sont extraites des tubes-guides 13.

Selon la présente invention, de façon à ce que le rapport de modération soit compatible avec un mode conventionnel de fonctionnement dans le spectre des neutrons thermiques, les assemblages 10 et 11 comportent, dans la maille du réseau des crayons, des emplacements 14 régulièrement répartis ne comportant pas de crayons fissiles 12.

Du fait de cette absence de crayons fissiles, les assemblages combustibles 10 et 11, de même dimension que les assemblages 4, 5 et 6 de la disposition précédente, ont un rapport de modération augmenté leur permettant ainsi d'entretenir la réaction de fission dans le spectre d'énergie des neutrons thermiques.

Les emplacements 14 vides de crayons fissiles peuvent toutefois être équipés de gaines, identiques aux gaines des crayons 12, contenant de l'eau de façon à ce que le bilan hydraulique de l'assemblage 11 soit identique au bilan hydraulique de l'assemblage 4, c'est-à-dire que ces deux assemblages soient identiques sur le plan des pertes de charge du réfrigérant les traversant.

Les gaines pleines d'eau peuvent être démunies de bouchons de fermeture à leurs extrémités pour constituer des tubes ouverts remplis par le réfrigérant du réacteur.

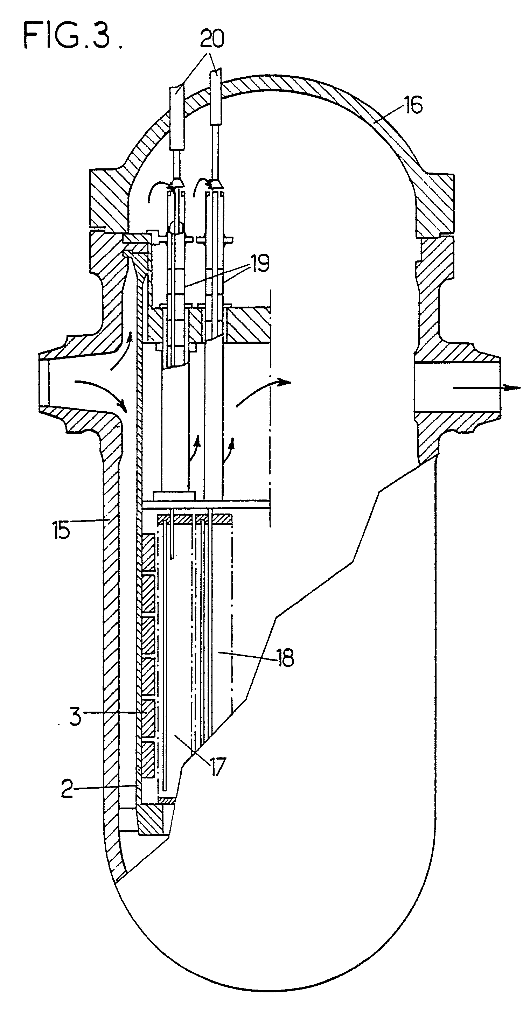

La figure 3 montre que l'invention est susceptible d'être mise en œuvre dans un réacteur présentant une constitution générale proche de celle des réacteurs classiques à eau sous-pression. La figure 3 montre une cuve 15 munie d'un couvercle 16 et contenant l'enveloppe du cœur 2. A l'intérieur de l'enveloppe est placé le réflecteur lourd 3 et le cœur 1, formé d'assemblages juxtaposés. On a indiqué schématiquement, côte à côte, un assemblage 17 destiné à recevoir une grappe de crayons absorbants et un assemblage 18 destiné à recevoir une grappe de crayons fertiles. Les équipements internes supérieurs du réacteur comprennent, au droit de chaque emplacement d'assemblage, un guide de grappe 19 et un mécanisme 20 de déplacement de grappes qui ne sera pas décrit ici, car il peut être de type classique. En règle générale, les mécanismes de déplacement de grappes fertiles seront à commande hydraulique tandis que les mécanismes de déplacement de grappes de crayons absorbants seront à commande électro-mécanique. Sur la figure 4, qui est une section schématique au niveau du plenum supérieur du réacteur, on voit que les grappes de crayons fertiles 21 sont à peu près deux fois plus nombreuses que les grappes de crayons absorbants 22 (indiquées par des hachures).

Selon la présente invention on voit qu'on peut exploiter un même réacteur nucléaire selon l'un quelconque de plusieurs modes de fonctionnement.

On peut pour réduire la quantité de plutonium nécessaire à la première charge d'un réacteur sous-modéré, effectuer un ou plusieurs cycles de fonctionnement à l'aide d'un cœur conventionnel utilisant des grappes fertiles comme moyen de variation de spectre et de durcissement local du flux de neutrons pendant une partie initiale de la durée de ces cycles. De cette manière et à titre d'exemple non limitatif, le procédé de la présente invention permet à un exploitant de choisir ou définir une séquence d'exploitation d'un réacteur nucléaire dont les constituants composant le cœur sont soit identiques pour le cloisonnement, soit compatibles sur le plan dimensionnel pour les assemblages en effectuant les étapes suivantes :

— On charge un cœur 9 d'assemblages combustibles 10 et 11. Après fermeture du couvercle de cuve, les grappes fertiles et absorbantes sont enfoncées dans les tubes-guides 13, puis on commande, par extraction des grappes absorbantes, le démarrage de la réaction de fission.

Pendant un cycle de huit mois, le réacteur fonctionne alors avec un spectre « durci » localement. Une partie de la matière fertile contenue dans les grappes et de l'uranium contenu dans les crayons fissiles 12 se transforme en matière fissile.

— Les grappes fertiles sont extraites et, pendant deux mois, le réacteur fonctionne dans un spectre d'énergie des neutrons thermiques en utilisant une partie de la matière fissile produite.

— Après arrêt du réacteur, on peut :

— Soit choisir un nouveau cycle identique en remplaçant une partie des assemblages 10 et 11 par des assemblages 10 et 11 neufs de façon conventionnelle.

— Soit choisir lors de cet arrêt un mode de fonctionnement différent.

C'est ainsi que, soit pour permettre une production plus importante de matière fissile, soit pour utiliser des assemblages combustibles à faible enrichissement en matière fissile, soit enfin pour économiser sur le cycle de la matière première que constitue l'uranium, on peut charger un cœur 1 en remplaçant tout ou partie des assemblages 10 et 11 par des assemblages 4, 5 et 6. Après fermeture de la cuve et démarrage de la réaction de fission, on fonctionnera alors à un taux de conversion élevé.

## Revendications

1. Procédé d'exploitation de réacteur nucléaire à eau légère, ayant un cœur constitué par juxtaposition d'assemblages combustibles verticaux adjacents et des équipements internes de guidage vertical de grappes de variation du spectre neutronique constituées de crayons fertiles et de grappes de commande constituées de crayons de matériau absorbant les neutrons, ces grappes ayant une répartition déterminée immuable, suivant lequel :

(a) on fait fonctionner le réacteur, au cours d'un premier cycle de fonctionnement du cœur, avec un cœur constitué d'assemblages combustibles d'un premier type, chaque assemblage combustible du premier type ayant des crayons de combustible répartis aux nœuds d'un réseau régulier et remplacés en certains des nœuds par des tubes guides prévus pour guider lesdites grappes,

avec les grappes de variation du spectre neutronique dans le cœur au cours d'une phase initiale du premier cycle de fonctionnement du cœur, et

avec les grappes de variation du spectre neutronique hors du cœur après écoulement partiel du premier cycle,

de façon à faire varier le spectre d'énergie des neutrons jusqu'au domaine thermique, caractérisé en ce que

(b) on fait fonctionner le réacteur, au cours d'un autre cycle de fonctionnement entièrement en sous-modération, avec un taux de conversion élevé en remplaçant certains au moins des assemblages combustibles du premier type dans le cœur par des assemblages combustibles d'un second type ayant chacun : des crayons de combustible répartis aux mêmes nœuds du même réseau que dans l'assemblage combustible du premier type ; des crayons de combustible supplémentaires placés en des nœuds du réseau qui sont continuellement occupés par de l'eau dans les assemblages combustibles du premier type ; et des tubes guides occupant les mêmes nœuds que les tubes guides dans les assemblages combustibles du premier type, avec variation du spectre neutronique au cours dudit autre cycle de fonctionnement jusqu'à des énergies qui restent toujours supérieures au domaine thermique.

2. Procédé selon la revendication 1, caractérisé en ce que ledit autre cycle est mis en œuvre après le premier.

3. Procédé selon la revendication 1 ou 2, caractérisé en ce que, au cours du premier cycle, on fait varier le taux de modération entre 1,5 et 2 et, au cours de l'autre cycle de fonctionnement, on fait varier le taux de modération entre 1,1 et 1,4.

4. Procédé selon la revendication 2, caractérisé en ce que, au cours dudit autre cycle de fonctionnement, on place des assemblages combustibles contenant uniquement du matériau fertile à la périphérie du cœur.

5. Procédé selon l'une quelconque des revendications précédentes, caractérisé en ce que l'on utilise des assemblages dans lesquels les crayons sont répartis aux nœuds d'un réseau triangulaire.

6. Procédé selon l'une quelconque des revendications précédentes, caractérisé en ce qu'on fait fonctionner le réacteur :

au cours du premier cycle, en variation de spectre jusqu'au domaine thermique en utilisant comme matériau combustible de l'uranium enrichi en U235, et

au cours de l'autre cycle, en utilisant comme matériau combustible de l'uranium naturel ou appauvri et du plutonium sous forme d'$UO_2$-$PuO_2$.

7. Réacteur nucléaire permettant de mettre en œuvre le procédé selon l'une quelconque des revendications 1 à 6, comprenant une cuve de résistance à la pression contenant le cœur constitué d'assemblages combustibles juxtaposés et des équipements internes supérieurs (18) de guidage des grappes de commande et des grappes de variation de spectre et comprenant des mécanismes (20) de déplacement vertical des grappes de commande et des grappes de variation de spectre, caractérisé en ce que les mécanismes de déplacement sont disposés au droit de chaque emplacement d'assemblage et en ce que le réseau des crayons dans chaque assemblage est tel que le cœur soit sous-modéré lorsque tous les nœuds du réseau sont occupés, certains au moins des assemblages du premier type comprenant, en certains nœuds du réseau, des tubes contenant de l'eau, dont le nombre et la répartition sont tels qu'ils permettent un fonctionnement du réacteur en régime thermique.

8. Réacteur selon la revendication 7, caractérisé en ce que chacun des assemblages combustibles du premier et du second type est associé à une grappe respective, le nombre de grappes de variation de spectre étant approximativement double du nombre de grappes de commande.

9. Réacteur selon la revendication 7 ou 8, caractérisé en ce que, aux nœuds du réseau démunis de tubes guides et démunis de crayons de combustible, l'eau est contenue dans des gaines similaires aux gaines des crayons combustibles.

## Claims

1. Method of operating a light water nuclear reactor having a core consisting of mutually adjacent vertical fuel assemblies and having internals for vertically guiding neutron spectrum variation clusters consisting of fertile rods and control clusters consisting of rods of neutron absorbing material, said clusters having a fixed predetermined distribution, wherein :

(a) the reactor is operated, during a first cycle of operation of the core, a the core consisting of fuel assemblies of a first type, each fuel assembly of the first type having fuel rods distributed at the nodal points of a regular array and substituted with guide tubes arranged for guiding said clusters in certain ones of the nodal points,

with the neutron spectrum variation clusters within the core during an initial phase of the first cycle of operation of the core, and

with the neutron spectrum variation clusters outside of the core after a first cycle has partially elapsed, whereby the neutron energy spectrum is varied up to the thermal range, characterized in that

(b) the reactor is operated, during another operation cycle, entirely in undermoderated condition, with a high rate of conversion, by substituting some at least of the fuel assemblies of the first type in the core with fuel assemblies of a second type, each having : fuel rods distributed at the same nodal points of the same array as in the fuel assembly of the first type ; additional fuel rods located at nodal points of the array which are continuously occupied by water in the fuel assemblies of the first type ; and guide tubes located at the same nodal points as the guide tubes in the fuel assemblies of the first type, with a variation of the neutron spectrum during said other cycle of operation up to energies which always remain higher than the thermal range.

2. Process according to claim 1, characterized in that said other cycle takes place after the first cycle,

3. Process according to claim 1 or 2, characterized in that, during the first cycle, the moderation ratio is varied between 1.5 and 2 and, during the other operation cycle, the moderation ratio is varied between 1.1 and 1.4.

4. Process according to claim 2, characterized in that, during said other operation cycle, fuel assemblies which only contain fertile material are located at the periphery of the core.

5. Process according to any one of the preceding claims, characterized in that assemblies are used in which the rods are distributed at the nodal points of a triangular array.

6. Process according to any one of the preceding claims, characterized in that the reactor is operated :

during the first cycle, with spectrum variation up to the thermal range while using U235 enriched uranium as fuel material, and

during the other cycle, while using natural or depleted uranium and plutonium as $UO_2$-$PuO_2$ as fuel material.

7. Nuclear reactor suitable for carrying out the process according to any one of claims 1-6, comprising a pressure vessel containing the core which consists of mutually adjacent fuel assemblies and upper internals (18) for guiding the control clusters and the spectrum variation clusters and comprising mechanisms (20) for vertically driving the control clusters and the spectrum variation clusters, characterized in that the driving mechanisms are located in alignment with each assembly location and in that the array of the rods within each assembly is such that the core be undermoderated when all nodal points of the array are occupied, some at least of the assemblies of the first type comprising, at certain nodal points of the array, tubes which contain water, whose number and distribution are such that they allow operation of the reactor in the thermal range.

8. Reactor according to claim 7, characterized in that each of the fuel assemblies of the first and of the second type is associated with a respective cluster, the number of spectrum variation clusters being approximatively double the number of the control clusters.

9. Reactor according to claim 7 or 8, characterized in that, at the nodal points of the array which are devoid of guide tubes and devoid of fuel rods, water is contained within sheaths similar to the sheaths of the fuel rods.


**Patentansprüche**

1. Verfahren zum Betrieb eines Leichtwasser-Kernreaktors, mit einem Kern, der durch Nebeneinanderreihung von benachbarten vertikalen Brennelementbündeln und inneren Einrichtungen zur Vertikalführung von aus brütbaren Stäben bestehenden Stabbündeln zur Variation des Neutronenspektrums und von aus Stäben aus Neutronen absorbierendem Material bestehenden Steuerstabbündel gebildet ist, wobei diese Bündel eine vorgegebene unveränderliche Verteilung haben, bei welchem Verfahren :

(a) der Reaktor im Verlauf eines ersten Betriebszyklus des Kernes mit einem Kern betrieben wird, der aus Brennelementbündeln eines ersten Typs besteht, wobei jedes Brennelementbündel des ersten Typs Brennstäbe aufweist, die an den Knoten eines regelmäßigen Netzes verteilt und in bestimmten Knoten durch Führungsrohre zum Führen der Stabbündel ersetzt sind,

wobei die Stabbündel zur Variation des Neutronenspektrums sich während einer Anfangsphase des ersten Betriebszyklus des Kernes im Kern befinden, und

wobei die Stabbündel zur Variation des Neutronenspektrums sich nach dem teilweisen Ablauf des ersten Zyklus außerhalb des Kernes befinden,

derart, daß das Neutronenenergiespektrum bis in den thermischen Bereich verändert wird, dadurch gekennzeichnet, daß

(b) der Reaktor während eines anderen Betriebszyklus vollständig im untermoderierten Bereich betrieben wird, mit einem erhöhten Umwandlungsgrad, indem zumindest bestimmte Brennelementbündel des ersten Typs im Kern durch Brennelementbündel eines zweiten Typs ersetzt werden, von denen jedes aufweist : Brennstäbe, die an den gleichen Knoten des gleichen Netzes wie in den Brennelementbündeln des ersten Typs verteilt sind ; zusätzliche Brennstäbe, die an den Knoten des Netzes angeordnet sind, welche in den Brennelementbündeln des ersten Typs ständig vom Wasser eingenommen werden ; und Führungsrohre, welche die gleichen Knoten wie die Führungsrohre in den Brennelementbündeln des ersten Typs einnehmen, wobei eine Variation des Neutronenspektrums während des anderen Betriebszyklus bis zu Energien erfolgt, die stets über dem thermischen Bereich liegen.

2. Verfahren nach Anspruch 1, dadurch gekennzeichnet, daß der andere Zyklus nach dem ersten Zyklus in Gang gesetzt wird.

3. Verfahren nach Anspruch 1 oder 2, dadurch gekennzeichnet, daß man während des ersten Zyklus den Moderierungsgrad zwischen 1,5 und 2 und während des anderen Betriebszyklus zwischen 1,1 und 1,4 variieren läßt.

4. Verfahren nach Anspruch 2, dadurch gekennzeichnet, daß während des anderen Betriebszyklus am Umfang des Kernes Brennelementbündel vorgesehen werden, die ausschließlich brütbares Material aufweisen.

5. Verfahren nach einem der vorhergehenden Ansprüche, dadurch gekennzeichnet, daß man Brennelementbündel verwendet, bei denen die Stäbe an den Knoten eines dreieckigen Netzes verteilt sind.

6. Verfahren nach einem der vorhergehenden Ansprüche, dadurch gekennzeichnet, daß der Reaktor betrieben wird :

während des ersten Zyklus mit Variation des Spektrums bis zum thermischen Bereich, indem als Brennmaterial mit U235 angereichertes Uran verwendet wird, und

während des anderen Zyklus, indem als Brennmaterial Natururan oder verarmtes Uran und Plutonium in der Form $UO_2$-$PuO_2$ verwendet wird.

7. Kernreaktor zur Durchführung des Verfahrens nach einem der Ansprüche 1 bis 6, mit einem Druckgehäuse, welches den Kern enthält, der durch nebeneinandergereihte Brennelementbündel und obere Inneneinrichtungen (18) zur Führung der Steuerstabbündel und der Stabbündel zur Variation des Spektrums gebildet ist und Mechanismen (20) zur Vertikalverstellung der Steuerstabbündel und der Stabbündel zur Variation des Specktrums enthält, dadurch gekennzeichnet, daß die Verstellmechanismen jedem Brennelementbündel gegenüber stehen und daß das Netz aus Stäben in jedem Brennelementbündel so ausgebildet ist, daß der Kern untermoderiert ist, wenn alle Knoten des Netzes besetzt sind, wobei zumindest bestimmte der Brennelementbündel des ersten Typs an bestimmten Knoten des Netzes wasserführende Rohre aufweisen, deren Anzahl und Verteilung derart getroffen ist, daß sie einen Betrieb des Reaktors im thermischen Bereich gestatten.

8. Reaktor nach Anspruch 7, dadurch gekennzeichnet, daß jedes der Brennelementbündel des ersten und des zweiten Typs einem entsprechenden Stabbündel zugeordnet ist, wobei die Anzahl der Stabbündel zur Variation des Spektrums etwa doppelt so groß wie die Anzahl der Steuerstabbündel ist.

9. Reaktor nach Anspruch 7 oder 8, dadurch gekennzeichnet, daß an den Knoten des Netzes, die von Führungsrohren und von Brennstäben frei sind, das Wasser in Hüllen enthalten ist, die ähnlich den Hüllen der Brennstäbe ausgebildet sind.

# FIG.1a.

# FIG.1b.

# FIG.2a.

# FIG.2b.

FIG.4.

# FIG.3.